# EUROPEAN PATENT SPECIFICATION

(11) **EP 2 281 372 B1**
(45) Date of publication and mention of the grant of the patent: **07.08.2013**
(21) Application number: 09757895.9
(22) Date of filing: 06.04.2009
(51) Int. Cl.: H04L 12/58

(54) **METHODS FOR SETTING UP AN IP CONNECTION USING A SHARED KEY AND RELATED ELECTRONIC DEVICES AND COMPUTER PROGRAM PRODUCTS**
VERFAHREN ZUR EINRICHTUNG EINER IP-VERBINDUNG MITHILFE EINES GEMEINSAM GENUTZTEN SCHLÜSSELS SOWIE ENTSPRECHENDE ELEKTRONISCHE VORRICHTUNG UND COMPUTERPROGRAMMPRODUKTE
PROCÉDÉS D'ÉTABLISSEMENT D'UNE CONNEXION IP À L'AIDE D'UNE CLÉ PARTAGÉE ET DISPOSITIFS ÉLECTRONIQUES ET PRODUITS DE PROGRAMME D'ORDINATEUR CORRESPONDANTS

(30) Priority: 27.05.2008 US 56280 P; 26.03.2009 US 412157
(43) Date of publication of application: 09.02.2011
(73) Proprietor: Sony Ericsson Mobile Communications AB, 221 88 Lund (SE)
(72) Inventor: BENGTSSON, Henrik Sven, S-227 36 Lund (SE)
(74) Representative: Valea AB
(86) International application number: PCT/IB2009/051440
(87) International publication number: WO 2009/147543

(56) References cited:
- WO-A1-2004/004379
- US-A1- 2003 018 887
- MELNIKOV ISODE LTD C WILSON NOKIA A: "IMAP4 Extensions for Quick Reconnect; draft-ietf-lemonade-reconnect-06.t" IETF STANDARD-WORKING-DRAFT, INTERNET ENGINEERING TASK FORCE, IETF, CH, vol. lemonade, no. 6, 15 May 2006 (2006-05-15), XP015045447 ISSN: 0000-0004

## Description

### BACKGROUND OF THE INVENTION

The present invention relates to communication networks, and, more particularly, to methods, electronic devices, and computer program products for setting up Internet Protocol (IP) connections.

The Internet is a decentralized network of computers that can communicate with one another via Internet Protocol (IP). The Internet includes the World Wide Web (WWW) service facility, which is a client/server-based facility that includes a large number of servers (computers connected to the Internet) on which Web pages or files reside, as well as clients (Web browsers), which interface users with the Web pages. The topology of the World Wide Web can be described as a network of networks, with providers of network services called Network Service Providers, or NSPs. Servers that provide application-layer services may be referred to as Application Service Providers (ASPs). Sometimes a single service provider provides both functions.

US 2003/0018887 discloses set up and management of communication sessions between electronic devices and a session management server.

### SUMMARY

In some embodiments of the present invention, a method of operating a first electronic device to set up a communication session with a second electronic device comprises establishing a communication connection with a session management server, sending a session identification associated with a previous communication session between the first and second electronic devices to the session management server, and communicating with the second electronic device responsive to the session management server joining the communication connection established with the session management server with a communication connection established between the session management server and the second electronic device.

In other embodiments, the second electronic device does not have a session identification that matches the session identification associated with the previous communication session. The method further comprises sending a session identification associated with the communication connection established with the session management server to the second electronic device.

In still other embodiments, communicating with the second electronic device comprises communicating with the second electronic device responsive to the session management server receiving the session identification associated with the communication established between the first electronic device and the session management server from the second electronic device.

In still other embodiments, sending the session identification associated with the communication connection established with the session management server to the second electronic device comprises sending the session identification associated with the communication connection established with the session management server to the second electronic device using Short Message Service (SMS).

In still other embodiments, establishing the communication connection with the session management server comprises establishing the communication connection with the session management server using Transmission Control Protocol (TCP).

In still other embodiments, the first and second electronic devices are mobile terminals.

In further embodiments of the present invention, a method of operating a first electronic device to set up a communication session with a second electronic device comprises establishing a communication connection with a session management server, receiving a request from the session management server for a session identification associated with a previous communication session between the first and second electronic devices, sending the session identification associated with the previous communication session between the first and second electronic devices to the session management server when the session identification associated with the previous communication session between the first and second electronic devices is stored on the first electronic device, and communicating with the second electronic device responsive to the session management server joining the communication connection established with the session management server with a communication connection established between the session management server and the second electronic device.

In still further embodiments, when the session identification associated with the previous communication session between the first and second electronic devices is not stored on the first electronic device, the method further comprises receiving a session identification associated with the communication connection established between the second electronic device and the session management server from the second electronic device, and wherein establishing the communication connection with the session management server comprises establishing the communication connection with the session management server responsive to receiving the session identification associated with the communication connection established between the second electronic device and the session management server.

In still further embodiments, the method further comprises sending the session identification associated with the communication connection established between the second electronic device and the session management server from the second electronic device to the session management server.

In still further embodiments, sending the session identification associated with the communication connection established between the second electronic device and the session management server comprises sending the session identification associated with the communication connection established between the second electronic device and the session management server using Short Message Service (SMS).

In still further embodiments, establishing the communication connection with the session management server comprises establishing the communication connection with the session management server using Transmission Control Protocol (TCP).

In still further embodiments, the first and second electronic devices are mobile terminals.

In other embodiments, a method of operating a session management server to set up a communication session between a first electronic device and a second electronic device comprises establishing a communication connection with the first electronic device, establishing a communication connection with the second electronic device, receiving a session identification associated with a previous communication session between the first and second electronic devices from the second electronic device, sending a request to the first electronic device for the session identification associated with a previous communication session between the first and second electronic devices, receiving the session identification associated with the previous communication session from the first electronic device, and joining the communication connection with the first electronic device with the communication connection with the second electronic device responsive to receiving the session identification associated with the previous communication session from the first electronic device.

In still other embodiments, establishing the communication connection with the first electronic device comprises establishing the communication connection with the first electronic device using Transmission Control Protocol (TCP).

In still other embodiments, establishing the communication connection with the second electronic device comprises establishing the communication connection with the second electronic device using Transmission Control Protocol (TCP).

In still other embodiments, the first and second electronic devices are mobile terminals.

In still other embodiments, a computer program product comprises computer-readable program code embodied on a computer-readable medium, the computer readable program code being configured to carry out one or more of the above-described methods.

### BRIEF DESCRIPTION OF THE DRAWINGS

Other features of the present invention will be more readily understood from the following detailed description of specific embodiments thereof when read in conjunction with the accompanying drawings, in which:
FIG. 1 is a block diagram that illustrates a client-server environment in accordance with some embodiments of the present invention;
FIG. 2 is a is a block diagram that illustrates a communication network in accordance with some embodiments of the present invention;
FIG. 3 is a block diagram that illustrates an electronic device/mobile terminal in accordance with some embodiments of the present invention; and
FIGS. 4 and 5 are message flow diagrams that illustrate operations for setting up an IP connection using a shared key in accordance with some embodiments of the present invention.

### DETAILED DESCRIPTION OF EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention may be embodied as methods, electronic devices, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, or device. More specific examples (a nonexhaustive list) of the computer-readable medium would include the following: a portable computer diskette, a random access memory (RAM), a read-only memory (ROM), an erasable programmable read-only memory (EPROM or Flash memory), and a compact disc read-only memory (CD-ROM).

As used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

For purposes of illustration, embodiments of the present invention are described herein in the context of a mobile terminal. It will be understood, however, that the present invention is not limited to such embodiments and may be embodied generally as an electronic device that is capable of communication over a network, such as the Internet, and using one or more communication protocols, such as the TCP/IP and/or Short Messaging Service (SMS) protocols. Moreover, some embodiments of the present invention are described herein in the context of a "chat session." A chat session can refer to any kind of communication over the Internet and includes, for example, direct one-on-one chat or text-based group chat using tools, such as Instant Messaging (IM) applications/clients.

According to some embodiments of the present invention, an Internet chat session can be setup between mobile terminals associated with two users A and B. A session Identification (ID) can be saved at the two mobile terminals and may be represent a shared secret key. The next time either of the two users A or B wants to setup a chat with the other, if the other party is already connected to a session management server, then the session ID can be used to setup the connection without the use of SMS. In some embodiments, the session ID can be encrypted.

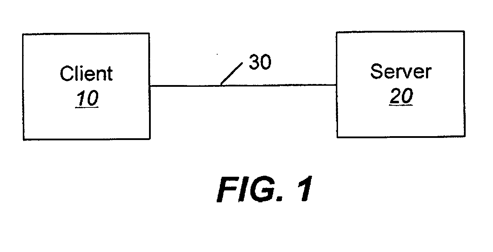

Embodiments according to the invention can operate in a logically separated client side/server side-computing environment, sometimes referred to hereinafter as a client/server environment. As shown in FIG. 1, a client 10 may communicate with a server 20 over a wireless and/or wireline communication medium 30. The client/server environment is a computational architecture that involves a client process (*i.e.,* a client) requesting service from a server process (i.e., a server). In general, the client/server environment maintains a distinction between processes, although client and server processes may operate on different machines or on the same machine. Accordingly, the client and server sides of the client/server environment are referred to as being logically separated. Usually, when client and server processes operate on separate devices, each device can be customized for the needs of the respective process. For example, a server process can "run on" a system having large amounts of memory and disk space, whereas the client process often "runs on" a system having a graphic user interface provided by high-end video cards and large-screen displays.

A client can be a program, such as a Web browser, that requests information, such as web pages, from a server under the control of a user. Examples of clients include browsers such as Netscape Navigator® (America Online, Inc., Dulles, VA) and Internet Explorer® (Microsoft Corporation, Redmond, WA). Browsers typically provide a graphical user interface for retrieving and viewing web pages, web portals, applications, and other resources served by Web servers. A SOAP client can be used to request web services programmatically by a program in lieu of a web browser. The applications provided by the service providers may execute on a server. The server can be a program that responds to the requests from the client. Some examples of servers are International Business Machines Corporation's family of Lotus Domino® servers, the Apache server and Microsoft's Internet Information Server (IIS) (Microsoft Corporation, Redmond, Washington).

The clients and servers can communicate using a standard communications mode, such as Hypertext Transport Protocol (HTTP) and SOAP. According to the HTTP request- response communications model, HTTP requests are sent from the client to the server and HTTP responses are sent from the server to the client in response to an HTTP request. In operation, the server waits for a client to open a connection and to request information, such as a Web page. In response, the server sends a copy of the requested information, to the client, closes the connection to the client, and waits for the next connection. It will be understood that the server can respond to requests from more than one client.

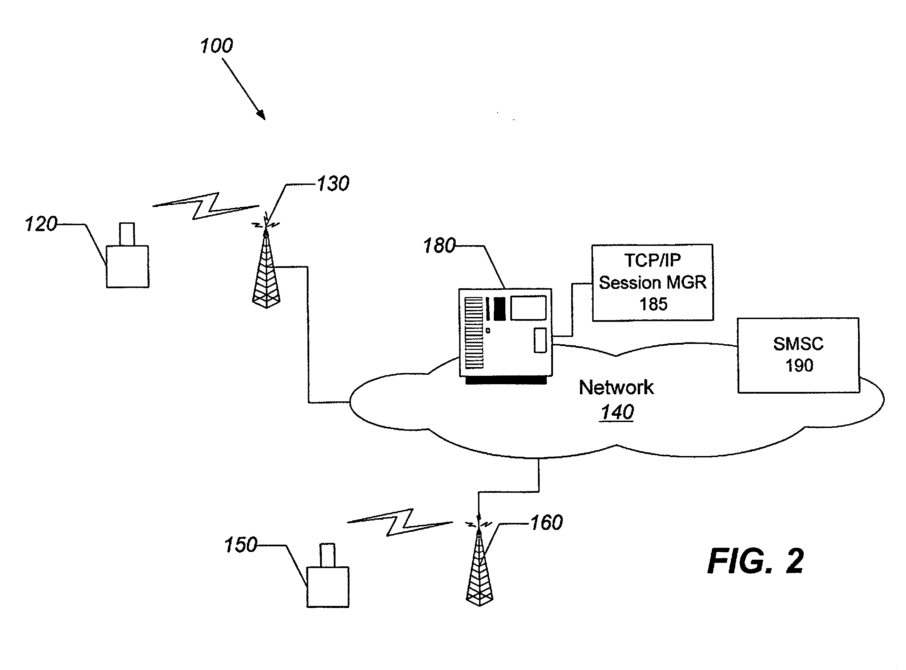

Referring now to FIG. 2, a network architecture, according to some embodiments of the present invention, includes a mobile terminal 120 that includes a Web server thereon, a mobile terminal 150, a session management server 180, and a Short Message Service Center (SMSC) 190 that are connected via a network 140 as shown. The network 140 includes wireless base station transceivers 130 and 160 that may facilitate wireless communication with the mobile terminals 120 and 150, respectively. The session management server 180 may include a TCP/IP session manager module that is configured to manage communication connections, such as TCP/IP connections, between devices, such as mobile terminals 120 and 150. The SMSC 190 may facilitate communication between devices, such as mobile terminals 120 and 150, using the Short Message Peer-to-Peer protocol (SMPP) to receive and deliver Short Message Service (SMS) messages. The network 140 may represent a global network, such as the Internet, or other publicly accessible network. The network 140 may also, however, represent a wide area network, a local area network, an Intranet, or other private network, which may not accessible by the general public. Furthermore, the network 140 may represent a combination of public and private networks or a virtual private network (VPN). Moreover, devices 120 and 150 are described as mobile terminals for purposes of illustrating some embodiments of the present invention. It will be understood that each of the devices 120 and 150 may be any electronic device that is capable of communicating via a network using, for example, a communication protocol, such as TCP/IP and/or SMS.

Although FIG. 2 illustrates an exemplary communication network, it will be understood that the present invention is not limited to such configurations, but is intended to encompass any configuration capable of carrying out the operations described herein.

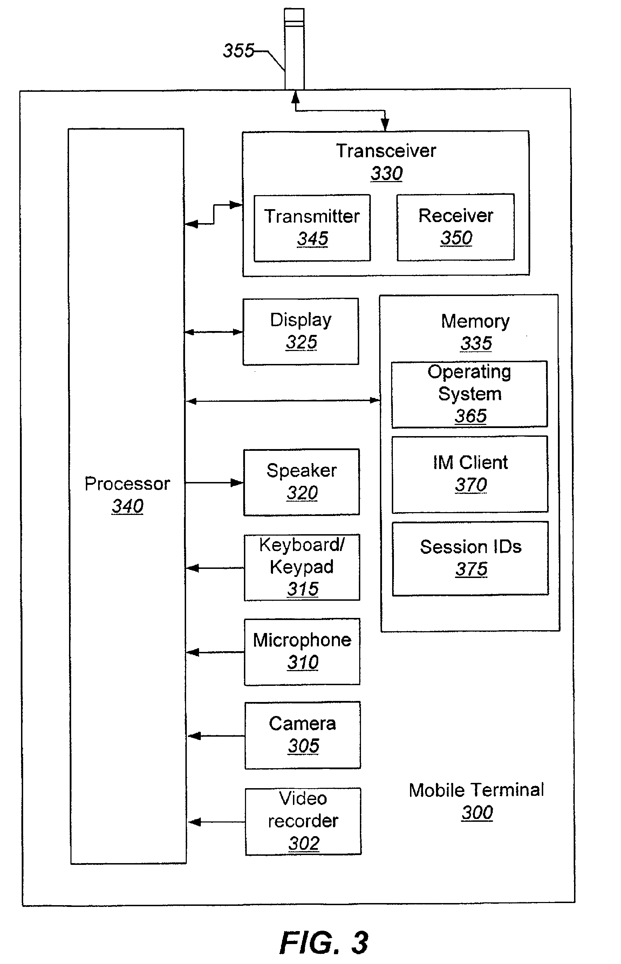

Referring now to FIG. 3, an exemplary mobile terminal 300 that may be used to implement mobile terminal 120 and/or 150 of FIG. 2, in accordance with some embodiments of the present invention, includes a video recorder 302, a camera 305, a microphone 310, a keyboard/keypad 315, a speaker 320, a display 325, a transceiver 330, and a memory 335 that communicate with a processor 340. The transceiver 330 comprises a transmitter circuit 345 and a receiver circuit 350, which respectively transmit outgoing radio frequency signals to base station transceivers and receive incoming radio frequency signals from the base station transceivers via an antenna 355. The radio frequency signals transmitted between the mobile terminal 300 and the base station transceivers may comprise both traffic and control signals (e.g., paging signals/messages for incoming calls), which are used to establish and maintain communication with another party or destination. The radio frequency signals may also comprise packet data information, such as, for example, cellular digital packet data (CDPD) information. The foregoing components of the mobile terminal 300 may be included in many conventional mobile terminals and their functionality is generally known to those skilled in the art.

The processor 340 communicates with the memory 335 via an address/data bus. The processor 340 may be, for example, a commercially available or custom microprocessor. The memory 335 is representative of the one or more memory devices containing the software and data used to provide a phone-based Web server with a private IP address, in accordance with some embodiments of the present invention. The memory 335 may include, but is not limited to, the following types of devices: cache, ROM, PROM, EPROM, EEPROM, flash, SRAM, and DRAM.

As shown in FIG. 3, the memory 335 may contain up to three or more categories of software and/or data: the operating system 365, an Instant Messaging (IM)/Chat client module 370, and a session ID module 375. The operating system 365 generally controls the operation of the mobile terminals 300. In particular, the operating system 365 may manage the mobile terminal's software and/or hardware resources and may coordinate execution of programs by the processor 340. The IM/Chat module is a client that runs on the mobile terminals and may be configured to establish, maintain, and tear down IM/chat sessions with other devices over a network, such as the Internet. The session ID module 375 may be configured to store session IDs for IM/chat sessions with other devices. Each session ID may represent a shared secret key between the mobile terminal and the other device associated with the IM/chat session.

Although FIG. 3 illustrates an exemplary software and hardware architecture that may be used to provide a mobile terminal that can setup an IM/chat session with another device using a session ID associated with a previous IM/chat session with the device it will be understood that the present invention is not limited to such a configuration, but is intended to encompass any configuration capable of carrying out the operations described herein.

Computer program code for carrying out operations of devices and/or systems discussed above with respect to FIGS. 1 - 3 may be written in a high-level programming language, such as Java, C, and/or C++, for development convenience. In addition, computer program code for carrying out operations of embodiments of the present invention may also be written in other programming languages, such as, but not limited to, interpreted languages. Some modules or routines may be written in assembly language or even micro-code to enhance performance and/or memory usage. It will be further appreciated that the functionality of any or all of the program modules may also be implemented using discrete hardware components, one or more application specific integrated circuits (ASICs), or a programmed digital signal processor or microcontroller.

The present invention is described hereinafter with reference to message flow diagram illustrations of method, mobile terminals, Internet servers, and/or computer program products in accordance with some embodiments of the invention.

These message flow diagrams further illustrate exemplary operations of setting up an IM/chat session between mobile terminals/electronic devices using a session ID associated with a previous IM/chat session between the devices and without the need to use SMS messaging during setup of the session in accordance with some embodiments of the present invention. It will be understood that each message, and combinations of messages in the message flow diagram illustrations, may be generated/implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the message flow diagram(s).

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the message flow diagram(s).

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the message flow diagram(s).

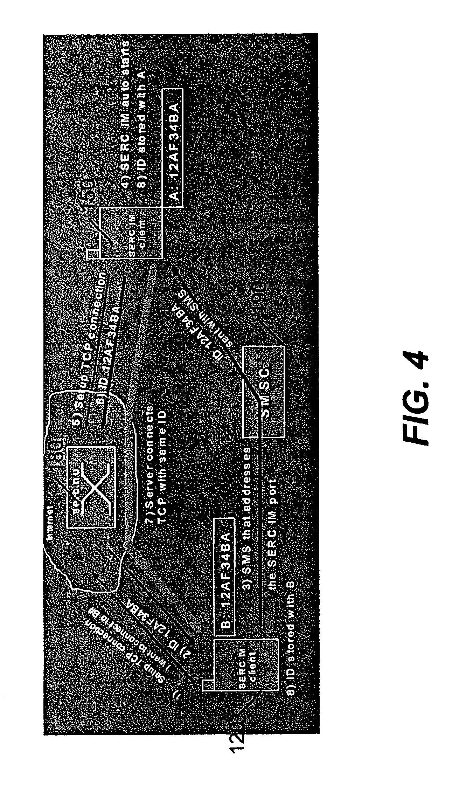

FIG. 4 is a message flow diagram that illustrates operations for setting up an IM/chat session between mobile terminals/electronic devices using a session ID associated with a previous IM/chat session between the devices in accordance with some embodiments of the present invention. The chat session begins with mobile terminal 120 ("A party") setting up a TCP connection to the session management server 180 with a request to connect to mobile terminal 150 ("B party"). The session management server 180 responds with a session ID that may be, for example, a unique, randomly chosen hash code. In the example shown in FIG. 4, the session ID is 12AF34BA. The A party then sends the session ID to the B party via an SMS message through the SMSC 190, which causes the IM client module 370 to launch on the mobile terminal 150. The B party sets up a TCP connection to the session management server 180 and provides the session ID, which was forwarded from the A party via SMS. The session management server 180 verifies that the session ID is the same as that provided to the A party previously and joins the connections with the A party and the B party so that the A party and B party now have a TCP connection therebetween. Each of the mobile terminals 120 and 150 associated with the A party and B party, respectively, may store the session ID in their respective session ID modules 375.

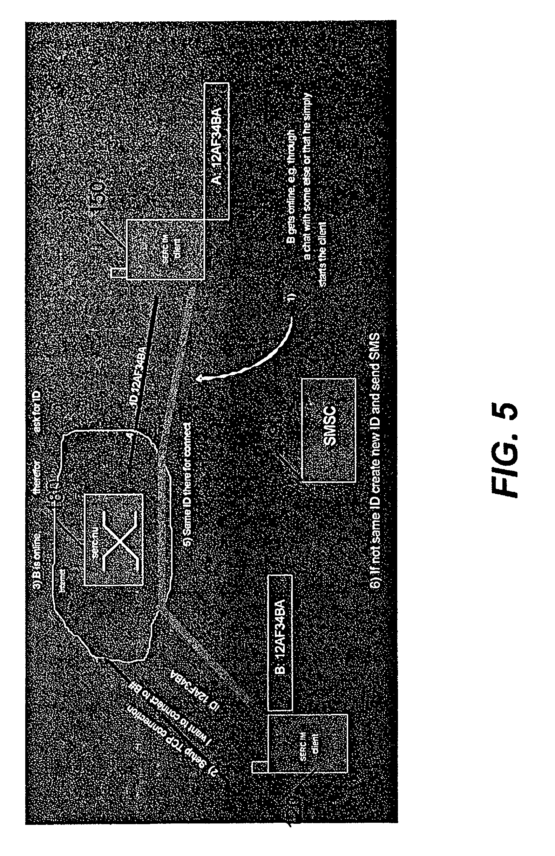

As shown in FIG. 4, setting up a connection between the A party and the B party involves the use of SMS. A potential drawback to using SMS is cost for the user and time as such messaging can take a few seconds to complete. If the A party and B party were already connected to the session management server 180, then a connection between the two parties may be established without the use of SMS. Unfortunately, the session management server 180 may not be able to verify the true identifies of the parties. For example, a party may claim to have a particular Mobile Subscriber Integrated Services Digital Network (MSISDN) number, which is the number associated with the SIM card in a mobile terminal. But a party may use a fake MSISDN number, which may result in one of the parties involved in an IM/chat session being an imposter. An approach to addressing this identity issue, according to some embodiments of the present invention, is described below with reference to FIG. 5.

As shown in FIG. 5, the B party has established a signaling channel to the session management server 180 and told the session management server that its presence status is online. Parties A and B have chatted before so they have saved the session ID in their respective session ID modules 375. The chat session begins with the A party setting up a chat channel to the session management server 180 with a request to connect to the B party. The A party may provide the MSISDN number of the B party along with the session ID from a previous chat session with the B party. The session management server 180 verifies that the B party is online and requests from the B party the session ID from the previous chat session that the B party had with the A party. The session management server 180 verifies that the session ID provided by the B party matches the session ID provided by the A party. If the session IDs match, then the session management server 180 joins the chat channels established with the A and B parties to form a chat connection therebetween. In the operations of FIG. 5, if the B party is not online, one or both of the parties have failed to store the session ID from a previous chat with each other, or the session IDs provided by the two parties do not match each other, then a connection between the A and B parties can be established using SMS as discussed above with reference to FIG. 4.

By using a previously used session ID between parties as a key to establishing a new connection, the session management server can reliably connect two parties without concern that one of the parties is using a fake MSISDN number. Moreover, a chat/IM session can be established between parties that have previously engaged in a chat/IM session without the need to use SMS messaging during setup.

The message flow diagrams of FIGS. 4 and 5 illustrate the architecture, functionality, and operations of embodiments of methods, electronic devices, Internet servers, and/or computer program products for setting up an IM/chat session between mobile terminals/electronic devices using a session ID associated with a previous IM/chat session between the devices. In this regard, each message and associated communication represents a module, segment, or portion of code, which comprises one or more executable instructions for implementing the specified logical function(s). It should also be noted that in other implementations, the message(s) noted in the blocks may occur out of the order noted in FIGS. 4 and 5. For example, two messages shown in succession may, in fact, be communicated substantially concurrently or the messages may sometimes be communicated in the reverse order, depending on the functionality involved.

Many variations and modifications can be made to the embodiments without substantially departing from the principles of the present invention. All such variations and modifications are intended to be included herein within the scope of the present invention, as set forth in the following claims.

## Claims

1. A method of operating a first electronic device to set up a communication session with a second electronic device, comprising:
establishing a communication connection with a session management server; the method **characterized by**
sending a session identification associated with a previous communication session between the first and second electronic devices and an identification of the second electronic device to the session management server; and
communicating with the second electronic device responsive to the session management server joining the communication connection established with the session management server with a communication connection established between the session management server and the second electronic device.

2. The method of Claim 1, wherein the second electronic device does not have a session identification that matches the session identification associated with the previous communication session, the method further comprising:
sending a session identification associated with the communication connection established with the session management server to the second electronic device.

3. The method of Claim 2, wherein communicating with the second electronic device comprises:
communicating with the second electronic device responsive to the session management server receiving the session identification associated with the communication established between the first electronic device and the session management server from the second electronic device.

4. The method of nay of Claim 2 or 3, wherein sending the session identification associated with the communication connection established with the session management server to the second electronic device comprises sending the session identification associated with the communication connection established with the session management server to the second electronic device using Short Message Service (SMS).

5. The method of any of Claims 1-4, wherein establishing the communication connection with the session management server comprises establishing the communication connection with the session management server using Transmission Control Protocol (TCP).

6. The method of any of Claims 1-5, wherein the first and second electronic devices are mobile terminals.

7. A method of operating a first electronic device to set up a communication session with a second electronic device, comprising:
establishing a communication connection with a session management server; the method **characterized by**
receiving a request from the session management server for a session identification associated with a previous communication session between the first and second electronic devices;
sending the session identification associated with the previous communication session between the first and second electronic devices to the session management server when the session identification associated with the previous communication session between the first and second electronic devices is stored on the first electronic device; and
communicating with the second electronic device responsive to the session management server joining the communication connection established with the session management server with a communication connection established between the session management server and the second electronic device.

8. The method of Claim 7, further comprising when the session identification associated with the previous communication session between the first and second electronic devices is not stored on the first electronic device:
receiving a session identification associated with the communication connection established between the second electronic device and the session management server from the second electronic device; and
wherein establishing the communication connection with the session management server comprises establishing the communication connection with the session management server responsive to receiving the session identification associated with the communication connection established between the second electronic device and the session management server.

9. The method of Claim 8, further comprising:
sending the session identification associated with the communication connection established between the second electronic device and the session management server from the second electronic device to the session management server.

10. The method of Claim 9, wherein sending the session identification associated with the communication connection established between the second electronic device and the session management server comprises sending the session identification associated with the communication connection established between the second electronic device and the session management server using Short Message Service (SMS).

11. The method of any of Claims 7-10, wherein establishing the communication connection with the session management server comprises establishing the communication connection with the session management server using Transmission Control Protocol (TCP).

12. The method of any of Claims 7-11, wherein the first and second electronic devices are mobile terminals.

13. A method of operating a session management server to set up a communication session between a first electronic device and a second electronic device, comprising:
establishing a communication connection with the first electronic device;
establishing a communication connection with the second electronic device;
the method **characterized by** receiving a session identification associated with a previous communication session between the first and second electronic devices from the second electronic device;
sending a request to the first electronic device for the session identification associated with a previous communication session between the first and second electronic devices;
receiving the session identification associated with the previous communication session from the first electronic device; and
joining the communication connection with the first electronic device with the communication connection with the second electronic device responsive to receiving the session identification associated with the previous communication from the first electronic device and the session identification received from the first electronic device being the same as the session identification received from the second electronic device.

14. The method of Claim 13, wherein establishing the communication connection with the first electronic device comprises establishing the communication connection with the first electronic device using Transmission Control Protocol (TCP).

15. The method of Claim 13 or 14, wherein establishing the communication connection with the second electronic device comprises establishing the communication connection with the second electronic device using Transmission Control Protocol (TCP).

## Patentansprüche

1. Verfahren zum Betreiben eines ersten elektronischen Gerätes, um eine Kommunikationssitzung mit einem zweiten elektronischen Gerät einzurichten, umfassend:
Herstellen einer Kommunikationsverbindung mit einem Sitzungsmanagement-Server, wobei das Verfahren **gekennzeichnet ist durch**
Senden einer Sitzungsidentifikation, die einer vorhergehenden Kommunikationssitzung zwischen dem ersten und zweiten elektronischen Gerät zugeordnet ist, und einer Identifikation des zweiten elektronischen Gerätes an den Sitzungsmanagement-Server, und
Kommunizieren mit dem zweiten elektronischen Gerät, das auf den Sitzungsmanagement-Server anspricht, der die Kommunikationsverbindung, die mit dem Sitzungsmanagement-Server hergestellt ist, mit einer Kommunikationsverbindung verknüpft, die zwischen dem Sitzungsmanagement-Server und dem zweiten elektronischen Gerät hergestellt ist.

2. Verfahren nach Anspruch 1, wobei das zweite elektronische Gerät keine Sitzungsidentifikation aufweist, die zur Sitzungsidentifikation passt, die der vorhergehenden Kommunikationssitzung zugeordnet ist, wobei das Verfahren ferner umfasst:
Senden einer Sitzungsidentifikation an das zweite elektronische Gerät, die der Kommunikationsverbindung zugeordnet ist, die mit dem Sitzungsmanagement-Server hergestellt ist.

3. Verfahren nach Anspruch 2, wobei das Kommunizieren mit dem zweiten elektronischen Gerät umfasst:
Kommunizieren mit dem zweiten elektronischen Gerät, das auf den Sitzungsmanagement-Server anspricht, der die Sitzungsidentifikation, die der Kommunikation zugeordnet ist, die zwischen dem ersten elektronischen Gerät und dem Sitzungsmanagement-Server hergestellt ist, aus dem zweiten elektronischen Gerät empfängt.

4. Verfahren nach einem der Ansprüche 2 oder 3, wobei das Senden der Sitzungsidentifikation, die der Kommunikationsverbindung zugeordnet ist, die mit dem Sitzungsmanagement-Server hergestellt ist, ein Senden der Sitzungsidentifikation, die der Kommunikationsverbindung zugeordnet ist, die mit dem Sitzungsmanagement-Server hergestellt ist, an das zweite elektronische Gerät unter Verwendung einer Short Message Service (SMS) umfasst.

5. Verfahren nach einem der Ansprüche 1-4, wobei das Herstellen der Kommunikationsverbindung mit dem Sitzungsmanagement-Server ein Herstellen der Kommunikationsverbindung mit dem Sitzungsmanagement-Server unter Verwendung eines Transmission Control Protocol (TCP) umfasst.

6. Verfahren nach einem der Ansprüche 1-5, wobei das erste und zweite elektronische Gerät mobile Endgeräte sind.

7. Verfahren zum Betreiben eines ersten elektronischen Gerätes, um eine Kommunikationssitzung mit einem zweiten elektronischen Gerät einzurichten, umfassend:
Herstellen einer Kommunikationsverbindung mit einem Sitzungsmanagement-Server, wobei das Verfahren **gekennzeichnet ist durch**
Empfangen einer Anforderung von dem Sitzungsmanagement-Server bezüglich einer Sitzungsidentifikation, die einer vorhergehenden Kommunikationssitzung zwischen dem ersten und zweiten elektronischen Gerät zugeordnet ist,
Senden der Sitzungsidentifikation, die der vorhergehenden Kommunikationssitzung zwischen dem ersten und zweiten elektronischen Gerät zugeordnet ist, an den Sitzungsmanagement-Server, wenn die Sitzungsidentifikation, die einer vorhergehenden Kommunikationssitzung zwischen dem ersten und zweiten elektronischen Gerät zugeordnet ist, in dem ersten elektronischen Gerät gespeichert ist, und
Kommunizieren mit dem zweiten elektronischen Gerät, das auf den Sitzungsmanagement-Server anspricht, der die Kommunikationsverbindung, die mit dem Sitzungsmanagement-Server hergestellt ist, mit einer Kommunikationsverbindung verknüpft, die zwischen dem Sitzungsmanagement-Server und dem zweiten elektronischen Gerät hergestellt ist.

8. Verfahren nach Anspruch 7, wobei das Verfahren dann, wenn die Sitzungsidentifikation, die einer vorhergehenden Kommunikationssitzung zwischen dem ersten und zweiten elektronischen Gerät zugeordnet ist, nicht in dem ersten elektronischen Gerät gespeichert ist, ferner umfasst:
Empfangen einer Sitzungsidentifikation, die der Kommunikationsverbindung zugeordnet ist, die zwischen dem zweiten elektronischen Gerät und dem Sitzungsmanagement-Server hergestellt ist, von dem zweiten elektronischen Gerät und
wobei das Herstellen der Kommunikationsverbindung mit dem Sitzungsmanagement-Server ein Herstellen der Kommunikationsverbindung mit dem Sitzungsmanagement-Server umfasst, der auf den Empfang der Sitzungsidentifikation anspricht, die der Kommunikationsverbindung zugeordnet ist, die zwischen dem zweiten elektronischen Gerät und dem Sitzungsmanagement-Server hergestellt ist.

9. Verfahren nach Anspruch 8, ferner umfassend:
Senden der Sitzungsidentifikation, die der Kommunikationsverbindung zugeordnet ist, die zwischen dem zweiten elektronischen Gerät und dem Sitzungsmanagement-Server hergestellt ist, von dem zweiten elektronischen Gerät an den Sitzungsmanagement-Server.

10. Verfahren nach Anspruch 9, wobei das Senden der Sitzungsidentifikation, die der Kommunikationsverbindung zugeordnet ist, die zwischen dem zweiten elektronischen Gerät und dem Sitzungsmanagement-Server hergestellt ist, ein Senden der Sitzungsidentifikation, die der Kommunikationsverbindung zugeordnet ist, die zwischen dem zweiten elektronischen Gerät und dem Sitzungsmanagement-Server hergestellt ist, unter Verwendung einer Short Message Service (SMS) umfasst.

11. Verfahren nach einem der Ansprüche 7-10, wobei das Herstellen der Kommunikationsverbindung mit dem Sitzungsmanagement-Server ein Herstellen der Kommunikationsverbindung mit dem Sitzungsmanagement-Server unter Verwendung eines Transmission Control Protocol (TCP) umfasst.

12. Verfahren nach einem der Ansprüche 7-11, wobei das erste und zweite elektronische Gerät mobile Endgeräte sind.

13. Verfahren zum Betreiben eines Sitzungsmanagement-Servers, um eine Kommunikationssitzung zwischen einem ersten elektronischen Gerät und einem zweiten elektronischen Gerät einzurichten, umfassend:
Herstellen einer Kommunikationsverbindung mit dem ersten elektronischen Gerät,
Herstellen einer Kommunikationsverbindung mit dem zweiten elektronischen Gerät,
wobei das Verfahren **gekennzeichnet ist durch**
Empfangen einer Sitzungsidentifikation, die einer vorhergehenden Kommunikationssitzung zwischen dem ersten und zweiten elektronischen Gerät zugeordnet ist, von dem zweiten elektronischen Gerät,
Senden einer Anforderung an das erste elektronische Gerät bezüglich einer Sitzungsidentifikation, die der vorhergehenden Kommunikationssitzung zwischen dem ersten und zweiten elektronischen Gerät zugeordnet ist,
Empfangen der Sitzungsidentifikation, die der vorhergehenden Kommunikationssitzung zugeordnet ist, von dem ersten elektronischen Gerät,
Verknüpften der Kommunikationsverbindung mit dem ersten elektronischen Gerät mit der Kommunikationsverbindung mit dem zweiten elektronischen Gerät in Reaktion auf den Empfang der Sitzungsidentifikation, die der vorhergehenden Kommunikationssitzung zugeordnet ist, von dem ersten elektronischen Gerät und der Sitzungsidentifikation, die von dem ersten elektronischen Gerät empfangen wurde, welche die gleiche ist wie die Sitzungsidentifikation, die von dem zweiten elektronischen Gerät empfangen wurde.

14. Verfahren nach Anspruch 13, wobei das Herstellen der Kommunikationsverbindung mit dem ersten elektronischen Gerät ein Herstellen der Kommunikationsverbindung mit dem ersten elektronischen Gerät unter Verwendung eines Transmission Control Protocol (TCP) umfasst.

15. Verfahren nach Anspruch 13 oder 14, wobei das Herstellen der Kommunikationsverbindung mit dem ersten elektronischen Gerät ein Herstellen der Kommunikationsverbindung mit dem zweiten elektronischen Gerät unter Verwendung eines Transmission Control Protocol (TCP) umfasst.

## Revendications

1. Procédé de fonctionnement d'un premier dispositif électronique pour établir une session de communication avec un deuxième dispositif électronique, comprenant :
l'établissement d'une connexion de communication avec un serveur de gestion de session ;
le procédé étant **caractérisé par** :
l'envoi d'une identification de session associée à une session de communication antérieure entre les premier et deuxième dispositifs électroniques et d'une identification du deuxième dispositif électronique au serveur de gestion de session ; et
la communication avec le deuxième dispositif électronique en réponse à une liaison, par le biais du serveur de gestion de session, entre la connexion de communication établie avec le serveur de gestion de session et une connexion de communication établie entre le serveur de gestion de session et le deuxième dispositif électronique.

2. Procédé de la revendication 1, dans lequel le deuxième dispositif électronique ne possède pas une identification de session qui correspond à l'identification de session associée à la session de communication antérieure, le procédé comprenant en outre :
l'envoi d'une identification de session associée à la connexion de communication établie avec le serveur de gestion de session au deuxième dispositif électronique.

3. Procédé de la revendication 2, dans lequel la communication avec le deuxième dispositif électronique comprend :
la communication avec le deuxième dispositif électronique en réponse à la réception, par le biais du serveur de gestion de session, d'une identification de session associée à la communication établie entre le premier dispositif électronique et le serveur de gestion de session à partir du deuxième dispositif électronique.

4. Procédé de l'une de la revendication 2 ou 3, dans lequel l'envoi de l'identification de session associée à la connexion de communication établie avec le serveur de gestion de session au deuxième dispositif électronique comprend le fait d'envoyer l'identification de session associée à la connexion de communication établie avec le serveur de gestion de session au deuxième dispositif électronique en utilisant le Service de Minimessages (SMS).

5. Procédé de l'une des revendications 1 à 4, dans lequel l'établissement de la connexion de communication avec le serveur de gestion de session comprend l'établissement de la connexion de communication avec le serveur de gestion de session en utilisant le Protocole de Contrôle de Transmission (TCP).

6. Procédé de l'une des revendications 1 à 5, dans lequel les premier et deuxième dispositifs électroniques sont des terminaux mobiles.

7. Procédé de fonctionnement d'un premier dispositif électronique pour établir une session de communication avec un deuxième dispositif électronique, comprenant :
l'établissement d'une connexion de communication avec un serveur de gestion de session ;
le procédé étant **caractérisé par** :
la réception d'une demande à partir du serveur de gestion de session pour une identification de session associée à une session de communication antérieure entre les premier et deuxième dispositifs électroniques ;
l'envoi de l'identification de session associée à la session de communication antérieure entre les premier et deuxième dispositifs électroniques au serveur de gestion de session lorsque l'identification de session associée à la session de communication antérieure entre les premier et deuxième dispositifs électroniques est stockée sur le premier dispositif électronique ; et
la communication avec le deuxième dispositif électronique en réponse à une liaison, par le biais du serveur de gestion de session, entre la connexion de communication établie avec le serveur de gestion de session et une connexion de communication établie entre le serveur de gestion de session et le deuxième dispositif électronique.

8. Procédé de la revendication 7, comprenant en outre, lorsque l'identification de session associée à la session de communication antérieure entre les premier et deuxième dispositifs électroniques n'est pas stockée sur le premier dispositif électronique, le fait :
de recevoir une identification de session associée à la connexion de communication établie entre le deuxième dispositif électronique et le serveur de gestion de session à partir du deuxième dispositif électronique ; et
dans lequel l'établissement de la connexion de communication avec le serveur de gestion de session comprend le fait d'établir la connexion de communication avec le serveur de gestion de session en réponse à la réception de l'identification de session associée à la connexion de communication établie entre le deuxième dispositif électronique et le serveur de gestion de session.

9. Procédé de la revendication 8, comprenant en outre :
l'envoi de l'identification de session associée à la connexion de communication établie entre le deuxième dispositif électronique et le serveur de gestion de session depuis le deuxième dispositif électronique au serveur de gestion de session.

10. Procédé de la revendication 9, dans lequel l'envoi de l'identification de session associée à la connexion de communication établie entre le deuxième dispositif électronique et le serveur de gestion de session comprend le fait d'envoyer l'identification de session associée à la connexion de communication établie entre le deuxième dispositif électronique et le serveur de gestion de session en utilisant un Service de Minimessages (SMS).

11. Procédé de l'une des revendications 7 à 10, dans lequel l'établissement de la connexion de communication avec le serveur de gestion de session comprend le fait d'établir la connexion de communication avec le serveur de gestion de session en utilisant le Protocole de Contrôle de Transmission (TCP).

12. Procédé de l'une des revendications 7 à 11, dans lequel les premier et deuxième dispositifs électroniques sont des terminaux mobiles.

13. Procédé de fonctionnement d'un serveur de gestion de session pour établir une session de communication entre un premier dispositif électronique et un deuxième dispositif électronique, comprenant :
l'établissement d'une connexion de communication avec le premier dispositif électronique ;
l'établissement d'une connexion de communication avec le deuxième dispositif électronique ;
le procédé étant **caractérisé par** :
la réception d'une identification de session associée à une session de communication antérieure entre les premier et deuxième dispositifs électroniques à partir du deuxième dispositif électronique ;
l'envoi d'une demande au premier dispositif électronique pour l'identification de session associée à une session de communication antérieure entre les premier et deuxième dispositifs électroniques ;
la réception de l'identification de session associée à la session de communication antérieure à partir du premier dispositif électronique ; et
la liaison entre la connexion de communication avec le premier dispositif électronique et la connexion de communication avec le deuxième dispositif électronique en réponse à la réception de l'identification de session associée à la communication antérieure à partir du premier dispositif électronique, et l'identification de session reçue à partir du premier dispositif électronique étant la même que l'identification de session reçue à partir du deuxième dispositif électronique.

14. Procédé de la revendication 13, dans lequel l'établissement de la connexion de communication avec le premier dispositif électronique comprend le fait d'établir la connexion de communication avec le premier dispositif électronique en utilisant le Protocole de Contrôle de Transmission (TCP).

15. Procédé de la revendication 13 ou 14, dans lequel l'établissement de la connexion de communication avec le deuxième dispositif électronique comprend le fait d'établir la connexion de communication avec le deuxième dispositif électronique en utilisant le Protocole de Contrôle de Transmission (TCP).
